(19) **Europäisches Patentamt**
**European Patent Office**
**Office européen des brevets**

(11) **EP 3 850 510 B1**

(12) **EUROPEAN PATENT SPECIFICATION**

(45) Date of publication and mention
of the grant of the patent:
**27.12.2023  Bulletin 2023/52**

(21) Application number: **18938682.4**

(22) Date of filing: **01.11.2018**

(51) International Patent Classification (IPC):
**H04L 9/00** *(2022.01)*        **H04L 9/32** *(2006.01)*
**G06F 21/44** *(2013.01)*

(52) Cooperative Patent Classification (CPC):
**H04L 9/3247; G06F 21/44; H04L 9/007;
H04L 9/3265; H04L 9/3268**

(86) International application number:
**PCT/US2018/058698**

(87) International publication number:
**WO 2020/091789 (07.05.2020 Gazette 2020/19)**

(54) **INFRASTRUCTURE DEVICE ENROLMENT**

REGISTRIERUNG EINER INFRASTRUKTURVORRICHTUNG

INSCRIPTION DE DISPOSITIF D'INFRASTRUCTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.07.2021  Bulletin 2021/29**

(73) Proprietor: **Hewlett-Packard Development
Company, L.P.
Spring TX 77389 (US)**

(72) Inventors:
• **WATTIAU, Gaetan
Bristol BS34 8QZ (GB)**

• **SCHIFFMAN, Joshua Serratelli
Bristol BS34 8QZ (GB)**

(74) Representative: **HGF
HGF Limited
1 City Walk
Leeds LS11 9DX (GB)**

(56) References cited:
EP-A1- 3 139 571          WO-A1-2017/182343
US-A1- 2013 185 552      US-A1- 2013 290 735
US-A1- 2013 290 735      US-A1- 2017 243 021
US-A1- 2017 289 137      US-A1- 2018 034 646
US-A1- 2018 123 804      US-B1- 10 057 243

## Description

### BACKGROUND

Enrolment of infrastructure devices, such as printers, onto an enterprise network involves the provisioning of settings and values to ensure correct operation of the device on the network. Such settings may include security parameters and certificates relating to a domain in which the device operates.

On-premises enrolment processes may be performed via manual input, or pre-provisioned values. US 10,057,243 describes a method of securing data transport between an endpoint device, without an IP address and connected to a gateway device, and a connected service using a discovery agent, a discovery service, and an enrollment service. The method includes: sending to the discovery service on the gateway device, an authenticated identity beacon with a device profile of the endpoint device; verifying authentication of the endpoint device and the device profile and generating a certificate request for the endpoint device; processing, by the enrollment service, the certificate request for the endpoint device to translate the certificate request for a certificate authority and receiving a certificate for the endpoint device issued by the certificate authority; processing the received certificate for the endpoint device to translate the received certificate for the endpoint device to represent a privacy certificate authority; and performing cryptographic operations on data using the certificate for the endpoint device.

US 2018/123804 describes a distributed security model that may be used to achieve one or more of the following: authenticate system components; securely transport messages between system components; establish a secure communications channel over a constrained link; authenticate message content; authorize actions; and distribute authorizations and configuration data amongst users' system components in a device-as-a-key system.

US 2013/290735 describes a public key architecture (160) including a dual certificate hierarchy which facilitates two independent authentication functions. One of the authentication functions authenticates an authentication device to a verification device. The other authentication function authenticates a configuration device to the authentication device. In some embodiments, the authentication process uses a lightweight certificate formed in conjunction with a lightweight signature scheme.

### BRIEF INTRODUCTION OF THE DRAWINGS

Various features of the present disclosure will be apparent from the detailed description which follows, taken in conjunction with the accompanying drawings, which together illustrate features of the present disclosure, and wherein:

Figure 1 illustrates a device according to an example of the disclosure;
Figure 2 shows a method of provisioning information to a device according to an example of the disclosure;
Figure 3 illustrates a device connecting to an enterprise network according to examples of the disclosure;
Figure 4 shows a method for enrolling a device in an enterprise network according to an example of the disclosure;
Figure 5 shows another method according to an example of the disclosure;
Figure 6 shows another method according to an example of the disclosure;
Figure 7 shows another method according to an example of the disclosure; and
Figure 8 is a schematic block diagram of a computer system according to an example of the disclosure.

### DETAILED DESCRIPTION

The objects of the present invention are achieved by means of the appended set of claims.

In the following description, for purposes of explanation, numerous specific details of certain examples are set forth. Reference in the specification to "an example" or similar language means that a particular feature, structure, or characteristic described in connection with the example is included in at least that one example, but not necessarily in other examples.

Secure enrolment of printers and other infrastructure devices relies on mutual authentication between a device and an administrative service. However, many devices, are manufactured without a cryptographic identity or knowledge of which administrative domain they will be enrolled under. As a result, most on-premise enrolment processes are performed using manual input of settings, pre-provisioned values, or may be automated using insecure protocols.

Certain examples described herein provide methods and devices for automatically and securely enrolling devices, such as printers, personal computers, mobile devices, etc. into an enterprise network with no or limited manual intervention. This is achieved through the use of cryptographic identities pre-provisioned into the devices by the device manufacturer and a cryptographic binding that can be used by the device to determine which enterprise it is legitimately expected to join. Some examples may also enable re-provisioning of the device later in the life cycle to support contractual based businesses such as Device as a Service (DaaS).

Secure and authenticated communications between devices are normally based on shared cryptographic secrets, such as cryptographic identities, or based on asymmetric encryption schemes using a public/private key pair. However, for the resulting communications to be secure, certain cryptographic values relating to the chosen scheme should be securely provisioned to the devices.

For example, in the printer environment, an administrative service may not be able to trust that a remote printer is who it identifies itself to be prior to the provisioning process. As a result, secure enrolment into the administrative service may be a tedious, manual process in which a user interacts with the physical device (e.g. inserting USB stick, physically inputting certain values, etc.).

Alternative enrolment systems for devices not based on user manual interaction (i.e. Zero-Touch enrolment) may be insecure, due to the lack of out-of-the-box authentication of the devices. For example, these solutions may use an unauthenticated discovery protocol for devices to find an administration server without mutual authentication.

More general enrolment systems for Internet of Things (IoT) devices may implement Zero-Touch enrolment using pre-provisioned values to provide an authenticated enrolment process. However, the pre-provisioned values may not be able to be re-provisioned in the field, making it difficult to transfer the device to a new domain or enterprise.

Failure to provide a secure and authenticated enrolment process may create a number of potential security risks relating to connection of new devices to an enterprise network.

If no automated authentication process is provided for the devices, for example if a manufacturer does not provision an identity to the devices during manufacturing or a provisioned identity is not used during the enrolment process, this may lead to a risk of a malicious device enrolling in a company's organisation by masquerading as a legitimate device. The malicious device may attempt to initiate the enrolment process with the administrative service claiming to be, for example, a printer belonging to the network in the case of an unauthenticated enrolment process, or while spoofing a legitimate identity, such as a valid serial number in the case of a weakly authenticated enrolment process. As the administration service is unable to cryptographically verify the identity of the device in this case, setup information and security credentials may be provisioned to the malicious device, allowing the malicious device access to the enterprise's network and disclosing secret values (e.g. a printer admin password) to the malicious device.

Alternatively, the enrolment process may rely on the device having access to a cryptographically verifiable identity which is manually provided to the device by an administrator performing a tedious process of manually setting up each printer with an identity.

Security risks may also exist when a legitimate device is unable to authenticate the identity of an administrative service, such as a printer manager. For example, some automated printer enrolment systems may fail to authenticate a printer manager to a printer. This leads to the risk of an attacker taking control of an organisation's printers by masquerading as a legitimate printer manager.

When a device enrols with an administrative service or device manager, the manager may obtain full access to the device. If the device manager is not correctly authenticated, an attacker could masquerade as a legitimate device manager and use these privileges to compromise a device before it enrols to the legitimate device manager. This leads to the risk on an organisation enrolling a legitimate device that has been previously compromised by an attacker.

The device manager may not be authenticated at all, or may be authenticated using irrelevant properties. For example, the device manager may provide for authentication a certificate chain that links back to a well-known certifying authority. Using this process, the device may be able to check some properties (e.g. the device manager has a legitimate URL) but there is no unique binding between a device and a device manager. Moreover, a device manager can be legitimate for one set of devices but not for another.

Where a strong binding between the device and the manager is provided, this may be achieved in a way that creates a fixed binding for the entire life cycle of the device, starting from manufacture time, locking the devices to a unique device management system.

For example, such schemes may depend on the device manufacturer provisioning the device with an identity and a URL identifying the device manager in charge of device enrolment in the end user's organization. Thus, the manufacturer would need to know at the time the device is manufactured the identity of the end user and the URL of the end user's enrolment manager while the device can still be provisioned.

The binding between a device and its enrolment manager is then implicitly stated by the provisioning of the enrolment manager's URL in the device's memory. Providing a secure way to revoke and update this binding, especially when the device may be unreachable to the manufacturer once installed, may be difficult.

For these reasons, it may be difficult under such schemes to support business models where the manufacturer does not know the end user at the time of manufacture (for example when the device is to be sold through a third-party vendor), where ownership of the device changes (resale of the device), or where the owner of the device is not the end user organization (e.g. Device-as-a-Service).

Described examples provide method and apparatus to facilitate out-of-box two-way authentication of a device, such as a printer or computer system, to a device manager; provide for secure enrolment of the device in to the device manager's organization; and provide an easy and secure way for a manufacturer, or delegated entity, to support changes of operator/owner over the entire life cycle of the device.

In particular, examples provide for secure "zero-touch" enrolment of devices into an enterprise network's management service comprising: automatic provisioning of certificates and credentials; authenticating and verifying the devices' security policies and settings; and pushing policies to the devices. This may be based on the use of a cryptographic binding between a device identity and an organisation that may be revoked and/or updated through the life cycle of the device.

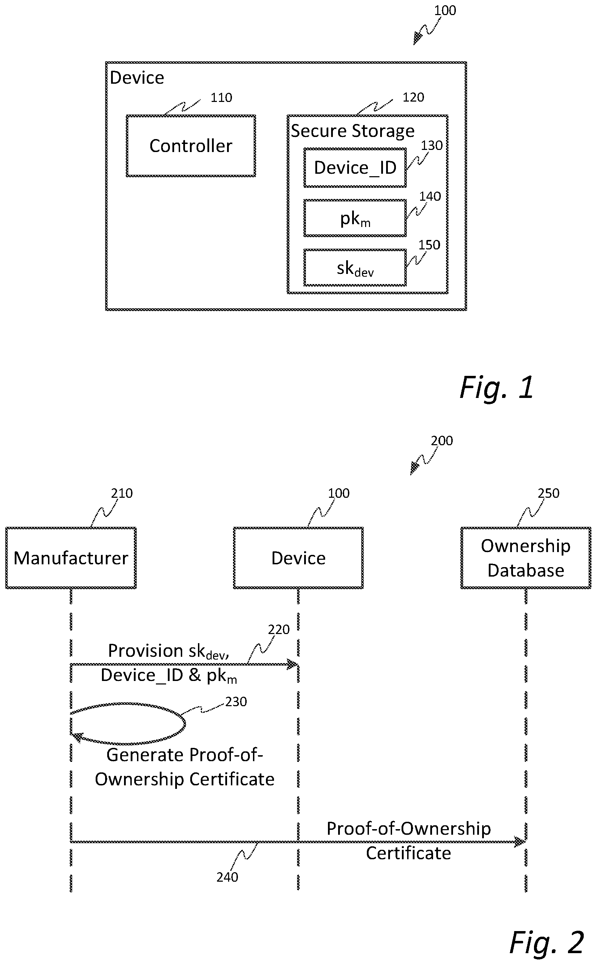

Figure 1 illustrates a device 100 according to an example of the disclosure. The device 100 includes a controller 110 and a secure storage 120. During manufacture, the manufacturing entity generates a public/private key pair for the device and provisions the device with the device private key ($sk_{dev}$) 150, along with a device identity (Device_ID) 130 and a public cryptographic key ($pk_m$) 140 corresponding to a manufacturer's secret key in an asymmetric encryption scheme. The skilled person will appreciate that a device 100 may comprise a number of other known components of which a description here is omitted, and that some components of the device 100 shown in Figure 1 may be optional for the purposes of this disclosure.

The Device_ID 130 may take the form of a certificate signed by the manufacturer using the OEM private key ($sk_m$). The certificate may contain various identifiers relating to the device, such as a serial number, etc., the identifier of the signing entity, e.g. the OEM, and the public key of the device's key pair. Thus, an entity receiving the Device_ID 130 would be able to verify the identity of the device using a manufacturer's public key and also verify that it is using the correct cryptographic public key for the device, corresponding to the device private key ($sk_{dev}$) 150 stored in the device.

Figure 2 is a sequence diagram illustrating a method 200 of provisioning to device 100 the Device_ID 130 and manufacturer's public key 140 and generating a proof-of-ownership certificate according to some examples. According to the method 200 illustrated in Figure 2, during manufacture of the device 100, a manufacturer 210 provisions 220 the device 100 with a Device_ID 130 as discussed above, certified using the manufacturer's secret key, the original equipment manufacturer's public key ($pk_m$) 140, and a device private key ($sk_{dev}$) 150. At some time subsequent to manufacture, the ownership of the device may be transferred to a new owner or operator, e.g. the device may be purchased. In response, the manufacturer generates 230 a proof-of-ownership certificate that cryptographically binds the identity of the device with an identity of the new owner of the device. This proof-of-ownership certificate is then provided 240 to a suitable store such as an ownership database 250.

The device identity (Device_ID) 130 is a binding between (at least) a device unique identifier, such as a serial number, and a secret securely stored in the device, e.g. the device's private key, ($sk_{dev}$) 150. For example, the secret may be stored in a secure storage such as a trusted platform module (TPM). This binding is signed by the device manufacturer using the OEM's secret key. This binding, that may be a certificate, may be used to perform protocols that uniquely identify and securely authenticate the device to other entities. Someone who receives this binding can trace it back to the manufacturer and trust that it was generated by the manufacturer and has not been altered. Thus, using the certified Device_ID 130 and the associated key pair, the device 100 may be securely authenticated by another entity using an authenticated protocol such as TLS.

In some examples, ownership database 250 may be a store of proof-of-ownership certificates maintained and made available by the original manufacturer of the device, or by an entity delegated by the manufacturer. Alternatively, or in addition, the ownership database 250 may be maintained by an organisation to store proof-of-ownership certificates for devices 100 owned or operated by that organisation, for example a device manager for managing devices in an enterprise network may be provided with proof-of-ownership certificates for those devices and operate as an ownership database 250 for those devices.

When ownership of the device 100 is transferred from the OEM 210 to a new owner/operator the manufacturer obtains an identifier for the new owner comprising a value that uniquely and securely identifies the owner, for example this identifier could be a certificate of the owner's certificate authority.

The OEM 210 uses the obtained owner identifier to generate the proof-of-ownership certificate comprising a cryptographic binding between the device identity and the owner identity and certified by the manufacturer 210 or by an organization authorized by the manufacturer to generate a proof-of-ownership certificate.

For example, proof-of-ownership may be generated with a cryptographic signature algorithm as follows:

$$Sign_{sk_m}(id_{device}, id_{owner})$$

Where:

$Sign_{sk_m}$ is a cryptographic signature algorithm with the secret key $sk_m$; $sk_m$ is the secret key of the manufacturer of an organization authorized by the manufacturer to generate proof-of-ownership for this device;
$id_{device}$ is a value that uniquely and securely identifies the device, for example the device identity provisioned by the manufacturer; and $id_{owner}$ is a value that uniquely and securely identifies the owner, for example the certificate of the owner's certificate authority.

Thus, the proof-of-ownership certificate allows a legitimate organization to state that a particular device 100 is owned by a specific enterprise. The proof-of-ownership certificate can be used to cryptographically authenticate the device and the device manager during an enrolment process.

In some examples, the right of generating a proof-of-ownership certificate for a device or group of devices may be delegated by the manufacturer to another organization. This right of delegating for a group of devices may itself also be delegated to a further organization.

The right to generate proof-of-ownership certificates for a device may be delegated by generating a cryptographic binding between a device, or a set of devices, and an organization and an indication of the delegated rights. For example, this delegation may be generated for a specific device and delegate organization with a cryptographic signature algorithm as follows:

$$Sign_{sk_m}(id_{device}, id_{delegate}, 'proof of ownership generation')$$

Where:

$Sign_{skm}$ is a cryptographic signature algorithm with the secret key $sk_m$; $sk_m$ is the secret key of the manufacturer;
$id_{device}$ is a value that uniquely and securely identifies the device, for example the device identity provisioned by the manufacturer;
$id_{delegate}$ is a value that uniquely and securely identifies the organization that receives the delegated right, for example the certificate of the organization's certificate authority; and
*'proof of ownership generation'* is the right delegated by the manufacturer to the delegate organization.

In order to delegate rights in respect of a set of devices to a delegate organization, the same protocol can be used to generate a delegation certificate replacing the device identifier with a value identifying the set of devices.

A device 100 may be assigned one of two different ownership statuses: *Not Assigned* - the device is not currently owned and the manufacturer is able to generate a binding to assign it to a new owner; and *Owned* - a proof of ownership has been generated where the proof-of-ownership binds one device with a single organisation. To transition from the *Not Assigned* status to the *Owned* status, the manufacturer can generate a proof of ownership certificate.

In order to support subsequent transfers of ownership of the device, the status can be transitioned from the *Owned* status to the *Not Assigned* status. This may be achieved, for example, by the manufacturer, or delegated authority, revoking the proof-of-ownership certificate, or by the proof-of-ownership certificate expiring according to properties encoded in it, for example an expiration date.

To assign a device 100 to a new owner, the manufacturer 210 can transition the device to the *Not Assigned* status and then generate a new proof-of-ownership to assign the device to the new owner and transition to the new *Owned* status. These two statuses and the transitions between these statuses can securely and meaningfully capture the entire life cycle of a device.

Revocation of a proof-of-ownership may take the form of an authenticated statement by the manufacturer 210 or a delegate that states, whether at the current time, the proof-of-ownership has been revoked. For example, this proof can be generated for a specific proof-of-ownership with a cryptographic signature algorithm as follows:

$$Sign_{sk_m}(proof\_of\_ownership, nonce, status)$$

Where:

$Sign_{skm}$ is a cryptographic signature algorithm with the secret key $sk_m$; $sk_m$ is the secret key of the manufacturer;
*proof_of_ownership* is the proof-of-ownership certificate;
*nonce* is a random number value that proves to the actor that chose the nonce the "freshness" of the proof; and
*status* is the status of the corresponding proof-of-ownership, e.g. "valid" or "revoked".

Upon first connecting a device 100 to a new enterprise network, the device will attempt to enrol with the organization. This process allows a device manager 310 in the enterprise to securely provision the device with credentials or a locally significant certificate, along with an appropriate security policy and other settings, to ensure correct operation of the device within the network. In examples, the device manager 310 may comprise software executing on a server or other computer system that performs management functions in the network, such as provisioning security certificates to devices and ensuring administrative policies are correctly implemented by devices connected to the network. The device manager 310 may also allow an administrator to perform other managerial tasks such as determining the location or status of a device, etc.

In examples, the enrolment protocol relies on the device's identity, for example the Device_ID 130, to allow the device to be authenticated; the device manager's cryptographic identity, for example its certificate, to authenticate the device manager; and the proof-of-ownership certificate to prove the binding between the two identities.

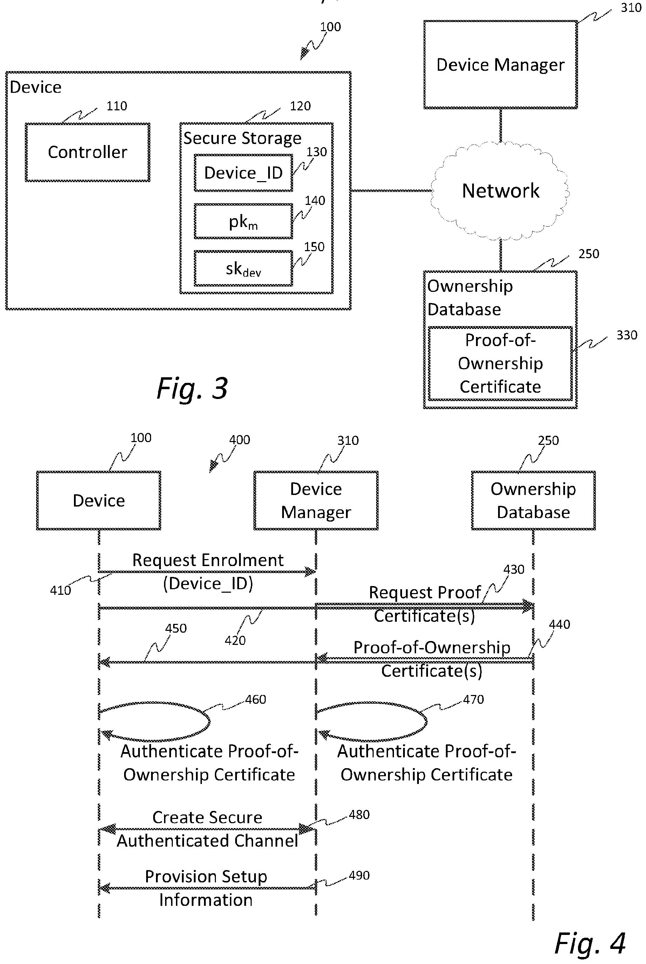

Figure 3 illustrates the device 100 connecting to an enterprise network according to examples of the present disclosure. Also coupled to the network is a device manager 310 and an ownership database 250. The ownership database including a proof-of-ownership certificate corresponding to the device 100.

At first boot, device 100 may automatically contact its device manager 310. The device can use its device identity to authenticate to the device manager and the device manager can use its own key pair to authenticate to the device. The device 100 and device manager 310 can then use the proof of ownership certificate 330 to authenticate that the device manager 310 represents the legitimate operator of the device, and the device is a legitimately owned device on the network.

Using an authentication protocol, the device manager 310 and the device 100 can create a secure authenticated communication channel, then:

- the device manager can securely provision the device with credentials or a locally significant certificate;
- the device can verify and authenticate its security policy and settings and send it to the device manager
- the device manager can push policies to the device and verify that they have been applied.

Figure 4 is a sequence diagram illustrating a method 400 for enrolling a device 100 in an enterprise network as shown in Figure 3. According to the method of Figure 4, at first boot of the device the device attempts to automatically contact a local device manager 310 in the network and request enrolment 410. The device and device manager then perform an ownership agreement protocol. Successfully performing the ownership agreement protocol proves the device that it is interacting with its legitimate owner, and proves to the device manager that it is interacting with a device that it owns.

To perform the ownership agreement protocol, the device 100 is able to query 420 the ownership database 220 maintained by the OEM 210 or a delegated authority to retrieve its corresponding proof-of-ownership certificate 560. The device 100 may also retrieve the current ownership proof certificate based on a "nonce" value provided with the query. The device 100 is then able to authenticate 460 the proof-of-ownership certificate using the public key provisioned by the manufacturer. Furthermore, the device 100 is able to verify that the ownership remains valid. If successful, the device 100 is able to verify that it is interacting with its legitimate owner.

However, if the ownership has changed and the proof-of-ownership certificate has been revoked, the device is able to determine this based on the retrieved current ownership information.

Similarly, device manager 310 queries 430 the ownership database 220 to request its associated proof certificates. The device manager 310 receives 440 its current proof-of-ownership certificates and is able to authenticate 470 the proof-of-ownership certificates to determine whether the device is a legitimate owned device 100. The device manager 310 may also retrieve the corresponding current ownership certificates based on a "nonce" value provided with the query, and the current ownership certificates may be used to verify that the proof-of-ownership certificate remains valid.

If the device 100 and the device manager 310 agree on ownership they may continue and perform the rest of the enrolment process, including:

- the device and the device manager use the authenticated communication to create 480 an authenticated and encrypted communication channel to perform the rest of the protocol;
- the device manager can send 490 a certificate and credentials to the device for it to authenticate to other actors in the organisation;
- the device may verify its security policy and setting, authenticate it and send it to the device manager.
- the device manager assesses the received security policy and setting;
- the device manager can then remediate the device with a new security policy and settings by sending them to the device;
- the device may then apply the new security policy and settings;
- the device can verify and authenticate its new security policy and settings and send them to the device manager to prove its compliance.

The device 100 or device manager 310 may choose to refresh the proof-of-ownership information at any time by querying the ownership database 250 for the latest proof-of-ownership certificates relating to their respective identifier along with associated current ownership proofs.

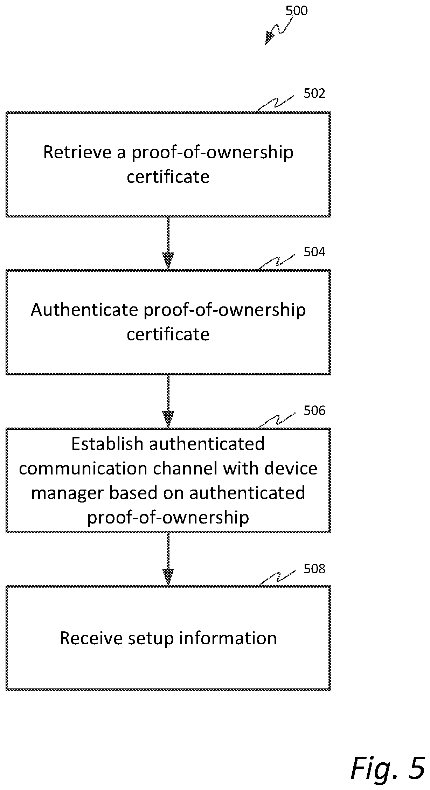

Figure 5 shows a method 500 according to an example of the disclosure to allow a device or device manager to authenticate an ownership relationship. According to the method 500 of Figure 5, the device or device manager retrieves 502 a proof-of-ownership certificate comprising a cryptographic binding between the device identifier and an owner identifier based on a secret key corresponding to a stored public key of a manufacturer, generated by the manufacturer or delegate, such as via an ownership database provided by the signing authority. The proof-of-ownership certificate 320 is then authenticated 504 using a stored device identifier and the public key of the manufacturer. Based on the authenticated proof-of-ownership information, a secure and authenticated communication channel is established 506 between the device and the device manager. Setup information is then received 508 at the device to enrol the device into the network.

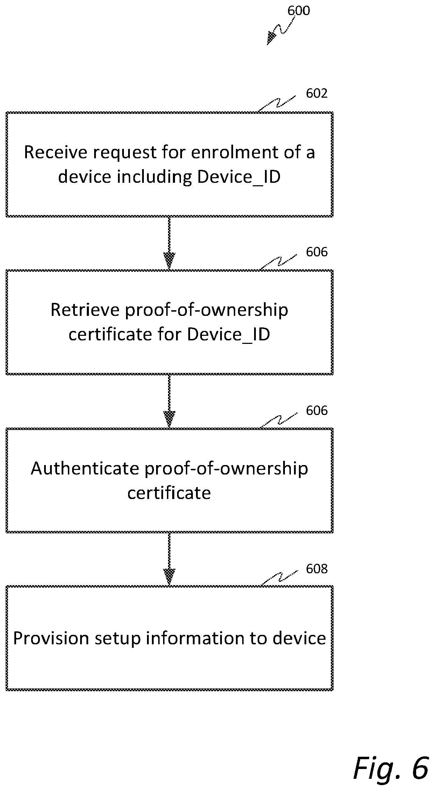

Figure 6 shows a method 600 according to an example of the disclosure to allow a device manager to enrol a newly connected device into an enterprise network. According to the method 600 of Figure 6, the device manager receives 602 a request for enrolment from a device 100 wishing to connect to the enterprise, the request including an identifier to allow the device to be securely identified. The device manager 310 then retrieves 604 a proof-of-ownership certificate corresponding to the received device identifier, the proof-of-ownership certificate comprising a cryptographic binding between the received device identifier and an owner identifier, the owner identifier associated with the device manager. The device manager 310 authenticates 606 the proof-of-ownership certificate based on a public key associated with a manufacturer of the device to determine that the device is legitimately associated with the device manager. Upon successful authentication of the proof-of-ownership certificate, the device manager 310 then provisions the device 100 with setup information to enrol the device onto the network.

As discussed above, in examples the methods 500 and 600 may further include retrieval of a current ownership proof by the device or device manager to verify the proof-of-ownership certificate remains valid and has not been revoked.

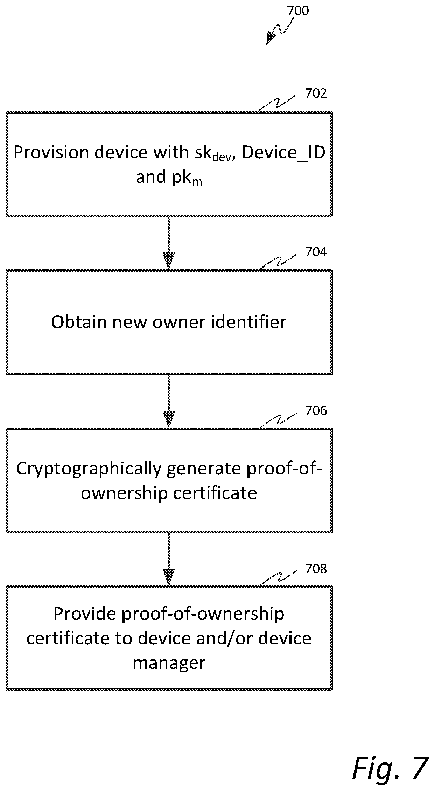

Figure 7 shows a method 700 of generating a proof-of-ownership certificate to reflect a change in ownership of a device 100. According to the method 700 of Figure 7, at manufacture time an OEM provisions 702 the device 100 with a secure device identifier and a public key of the OEM. When the device is sold or ownership otherwise changes to a new entity, the manufacturer obtains 704 an identifier for the new owner, such as the owner's certificate. The manufacturer, or delegate, then cryptographically generates 706 a proof-of-ownership certificate by cryptographically signing a combination of the device identifier and the owner identifier based on a manufacturer secret key corresponding to the public key provisioned to the device. The proof-of-ownership certificate is then provided 708 to the device and/or to a device manager of the owner, for example in response to receiving a query from the device or device manager.

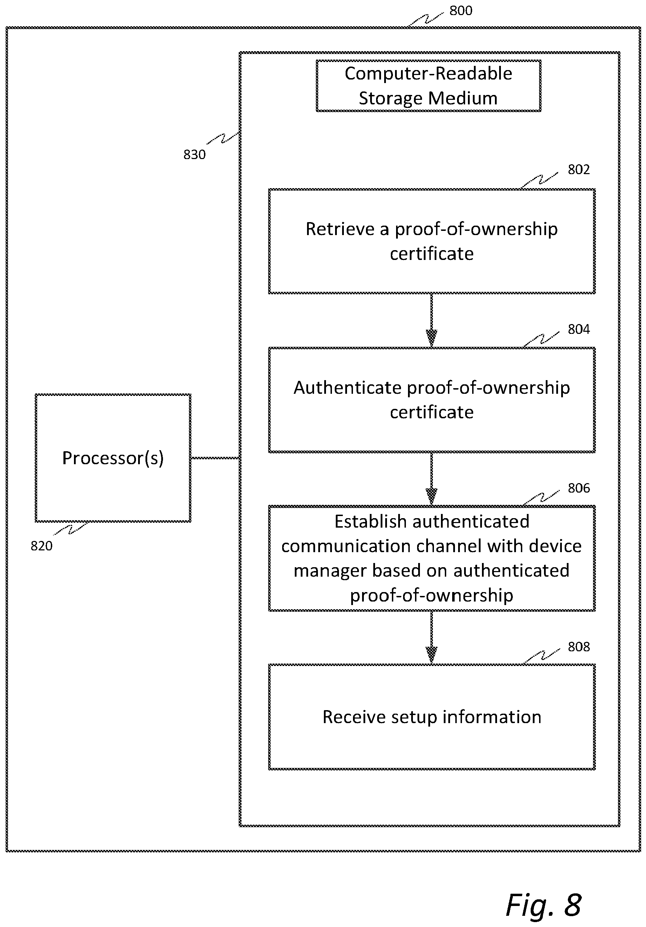

Certain methods and systems as described herein may be implemented by a processor that processes program code that is retrieved from a non-transitory storage medium. Figure 8 shows an example 800 of a device comprising a computer-readable storage medium 830 coupled to at least one processor 820. The computer-readable media 830 can be any media that can contain, store, or maintain programs and data for use by or in connection with an instruction execution system. Computer-readable media can comprise any one of many physical media such as, for example, electronic, magnetic, optical, electromagnetic, or semiconductor media. More specific examples of suitable machine-readable media include, but are not limited to, a hard drive, a random-access memory (RAM), a read-only memory (ROM), an erasable programmable read-only memory, or a portable disc.

In Figure 8, the computer-readable storage medium comprises program code to: retrieve 802 a proof-of-ownership certificate comprising a cryptographic binding between the device identifier and an owner identifier based on a secret key corresponding to the stored public key; authenticate 804 the proof-of-ownership certificate based on the stored device identifier and public key; establish 806 an authenticated communication channel with a device manager based on the authenticated proof-of-ownership certificate; and receive 808 setup information from the device manager to enrol the device on the network.

In other examples, computer-readable storage medium 830 may comprise program code to perform any of the methods illustrated in Figures 4 to 7.

All of the features disclosed in this specification (including any accompanying claims, abstract, and drawings) may be combined in any combination, except combinations where some of such features are mutually exclusive. Each feature disclosed in this specification, including any accompanying claims, abstract, and drawings), may be replaced by alternative features serving the same, equivalent, or similar purpose, unless expressly stated otherwise. Thus, unless expressly stated otherwise, each feature disclosed is one example of a generic series of equivalent or similar features.

The present teachings are not restricted to the details of any foregoing examples. Any novel combination of the features disclosed in this specification (including any accompanying claims, abstract, and drawings) may be envisaged. The claims should not be construed to cover merely the foregoing examples, but also any variants which fall within the scope of the claims.

**Claims**

1. A device (100) comprising:

a secure storage (120) comprising a device identifier (130) and a public key (140) associated with a manufacturer (210) of the device; the device (100) further comprising:
a controller (110) configured to:

retrieve a proof-of-ownership certificate (330) comprising a cryptographic binding between the device identifier (130) and an owner identifier based on a private key corresponding to the stored public key (140) associated with the manufacturer (210) of the device;
authenticate the proof-of-ownership certificate (330) based on the stored device identifier (130) and the public key (140) associated with the manufacturer (210) of the device;
establish an authenticated communication channel with a device manager (310) associated with the owner identifier based on the authenticated proof-of-ownership certificate (330); and
receive setup information from the device manager (310) associated with the owner identifier to enrol the device (100) on a network.

2. The device (100) of claim 1, wherein the secure storage (120) comprises a trusted platform module.

3. The device (100) of claim 1, wherein the controller (110) is further configured to:

retrieve a current ownership proof comprising a cryptographic signature of a combination of the proof-of-ownership certificate (330) and a status of the proof-of-ownership certificate based on the private key corresponding to the stored public key (140); and
in response to authentication of the current ownership proof, determining a validity of the proof-of-ownership certificate (330) based on the status value.

4. The device (100) of claim 1, wherein the device (100) comprises a printer.

5. The device (100) of claim 1, wherein the owner identifier comprises a certificate associated with an organization that owns the device (100) and wherein the controller (110) is further configured to authenticate the device manager (310) based on the owner identifier of the authenticated proof-of-ownership certificate (330).

6. The device (100) of claim 1, wherein the controller (110) is further to:

authenticate the contents of the proof-of-ownership certificate (330) using the stored public key (140);
determine that the device identifier of the proof-or-ownership certificate matches the stored device identifier (130); and
determine that the device manager (310) is associated with a legitimate owner of the device (100) based on the owner identifier.

7. A method (600) of securely enrolling a device (100) as defined in claim 1 in a network, the method (600) comprising:

receiving (602), at a device manager (310), a request for enrolment on the network from a device (100), the request including a device identifier (130);
retrieving (606), at the device manager (310), a proof-of-ownership certificate (330) comprising a cryptographic binding between the received device identifier and an owner identifier, the owner identifier associated with the device manager (310);
authenticating (606) the proof-of-ownership certificate (330) based on a public key (140) associated with a manufacturer (210) of the device to determine that the device (100) is legitimately associated with the device manager (310) associated with the owner identifier; and
provisioning (608) the device (100) with setup information.

8. The method (600) of claim 7, wherein authenticating the proof-of-ownership certificate (330) further comprises:

authenticating the contents of the proof-of-ownership certificate based on the manufacturer public key (140);
determining that that owner identifier of the proof-of-ownership certificate is associated with the device manager (310); and
determining that the device identifier of the proof-of-ownership certificate (330) matches a device identifier (130) included in the request for enrolment from the device (100).

**9.** The method (600) of claim 7, further comprising:

obtaining a delegation of proof-of-ownership generation certificate associated with the device identifier (130); and wherein authenticating the proof-of-ownership further comprises authenticating a certificate chain including the delegation of proof-of-ownership generation certificate based on the manufacturers public key (140).

**10.** The method (600) of claim 7, wherein provisioning (608) the device (100) with setup information further comprises securely provisioning the device with at least one of: a security policy; device settings; network credentials; and/or a local network certificate.

**11.** The method (600) of claim 7, further comprising:

retrieving a current ownership proof comprising a cryptographic signature of a combination of the proof-of-ownership certificate and a status of the proof-of-ownership certificate based on a private key corresponding to the stored public key (140); and
in response to authentication of the current ownership proof, determining a validity of the proof-of-ownership certificate (330) based on the status value.

**12.** A method (700) of generating a proof-of-ownership certificate (300) for a device (100) as defined in claim 1, the method comprising:

provisioning (702) the device (100) with a device identity (130) and a public key (140) associated with the manufacturer (210);
obtaining (704) an owner identifier corresponding with an owner of the device (100);
cryptographically signing (706) a combination of the device identifier (130) and the owner identifier based on a manufacturer private key corresponding to the public key (140) associated with the manufacturer (210) provisioned to the device (100) to generate the proof-of-ownership certificate (330); and
providing (708) the proof-of-ownership certificate (330) to the device (100) and/or the owner of the device.

**13.** The method (700) of claim 12 comprising:

cryptographically signing a combination of the proof-of-ownership certificate (330) and a status of the proof-of-ownership certificate based on the manufacturer private key to generate a current ownership proof; and
providing the current ownership proof to the device (100) and/or the owner of the device.

**14.** The method (700) of claim 13 further comprising:

receiving an indication of change of ownership of the device (100);
cryptographically signing a combination of the proof-of-ownership certificate and an indication of revocation of the proof-of-ownership certificate based on the manufacturers private key to generate a new current ownership proof; and
providing the new current ownership proof to the device (100) and/or the owner of the device indicating that the proof-of-ownership certificate has been revoked.

**15.** The method (700) of claim 12 further comprising cryptographically signing a combination of the device identifier (130) and a delegated organisation identifier to generate a delegation certificate based on the manufacturer private key to allow the delegation organisation to generate valid proof-of-ownership certificates (330).

**Patentansprüche**

**1.** Vorrichtung (100), die umfasst:
einen sicheren Speicher (120), der eine Vorrichtungskennung (130) und einen öffentlichen Schlüssel (140), der einem Hersteller (210) der Vorrichtung zugeordnet ist, umfasst; wobei die Vorrichtung (100) ferner umfasst:
einen Controller (110), der konfiguriert ist zum:

Abrufen eines Besitznachweiszertifikats (330), das eine kryptografische Bindung zwischen der Vorrichtungskennung (130) und einer Besitzerkennung umfasst, auf der Basis eines privaten Schlüssels, der dem gespeicherten öffentlichen Schlüssel (140), der dem Hersteller (210) der Vorrichtung zugeordnet ist, entspricht; Authentifizieren des Besitznachweiszertifikats (330) auf der Basis der gespeicherten Vorrichtungskennung (130) und des öffentlichen Schlüssels (140), der dem Hersteller (210) der Vorrichtung zugeordnet ist; Einrichten eines authentifizierten Kommunikationskanals mit einem Vorrichtungsmanager (310), der der Besitzerkennung zugeordnet ist, auf der Basis des authentifizierten Besitznachweiszertifikats (330); und Empfangen von Einrichtungsinformationen von dem Vorrichtungsmanager (310), der der Besitzerkennung zugeordnet ist, um die Vorrichtung (100) auf einem Netzwerk zu registrieren.

2. Vorrichtung (100) nach Anspruch 1, wobei der sichere Speicher (120) ein vertrauenswürdiges Plattformmodul umfasst.

3. Vorrichtung (100) nach Anspruch 1, wobei der Controller (110) ferner konfiguriert ist zum:

   Abrufen eines aktuellen Besitznachweises, der eine kryptografische Signatur einer Kombination aus dem Besitznachweiszertifikat (330) und einem Status des Besitznachweiszertifikats umfasst, auf der Basis des privaten Schlüssels, der dem gespeicherten öffentlichen Schlüssel (140) entspricht; und als Reaktion auf eine Authentifizierung des aktuellen Besitznachweises, Bestimmen einer Gültigkeit des Besitznachweiszertifikats (330) auf der Basis des Statuswerts.

4. Vorrichtung (100) nach Anspruch 1, wobei die Vorrichtung (100) einen Drucker umfasst.

5. Vorrichtung (100) nach Anspruch 1, wobei die Besitzerkennung ein Zertifikat umfasst, das einer Organisation, die die Vorrichtung (100) besitzt, zugeordnet ist, und wobei der Controller (110) ferner dazu konfiguriert ist, den Vorrichtungsmanager (310) auf der Basis der Besitzerkennung des authentifizierten Besitznachweiszertifikats (330) zu authentifizieren.

6. Vorrichtung (100) nach Anspruch 1, wobei der Controller (110) ferner dient zum:

   Authentifizieren der Inhalte des Besitznachweiszertifikats (330) unter Verwendung des gespeicherten öffentlichen Schlüssels (140); Bestimmen, dass die Vorrichtungskennung des Besitznachweiszertifikats mit der gespeicherten Vorrichtungskennung (130) übereinstimmt; und Bestimmen, dass der Vorrichtungsmanager (310) einem berechtigten Besitzer der Vorrichtung (100) zugeordnet ist, auf der Basis der Besitzerkennung.

7. Verfahren (600) zum sicheren Registrieren einer Vorrichtung (100) nach Anspruch 1 in einem Netzwerk, wobei das Verfahren (600) umfasst:

   Empfangen (602), an einem Vorrichtungsmanager (310), einer Anforderung für eine Registrierung auf dem Netzwerk von einer Vorrichtung (100), wobei die Anforderung eine Vorrichtungskennung (130) einschließt; Abrufen (606), an dem Vorrichtungsmanager (310), eines Besitznachweiszertifikats (330), das eine kryptografische Bindung zwischen der empfangenen Vorrichtungskennung und einer Besitzerkennung umfasst, wobei die Besitzerkennung dem Vorrichtungsmanager (310) zugeordnet ist; Authentifizieren (606) des Besitznachweiszertifikats (330) auf der Basis eines öffentlichen Schlüssels (140), der einem Hersteller (210) der Vorrichtung zugeordnet ist, um zu bestimmen, dass die Vorrichtung (100) dem Vorrichtungsmanager (310), der der Besitzerkennung zugeordnet ist, berechtigt zugeordnet ist; und Versorgen (608) der Vorrichtung (100) mit Einrichtungsinformationen.

8. Verfahren (600) nach Anspruch 7, wobei ein Authentifizieren des Besitznachweiszertifikats (330) ferner umfasst:

   Authentifizieren der Inhalte des Besitznachweiszertifikats auf der Basis des öffentlichen Herstellerschlüssels (140); Bestimmen, dass die Besitzerkennung des Besitznachweiszertifikats dem Vorrichtungsmanager (310) zugeordnet ist; und Bestimmen, dass die Vorrichtungskennung des Besitznachweiszertifikats (330) mit einer Vorrichtungskennung (130), die in der Anforderung für eine Registrierung von der Vorrichtung (100) eingeschlossen ist, übereinstimmt.

9. Verfahren (600) nach Anspruch 7, das ferner umfasst:

Erhalten einer Delegation eines Besitznachweiserzeugungszertifikats, das der Vorrichtungskennung (130) zugeordnet ist; und

wobei ein Authentifizieren des Besitznachweises ferner ein Authentifizieren einer Zertifikatkette, die die Delegation eines Besitznachweiserzeugungszertifikats einschließt, auf der Basis des öffentlichen Schlüssels (140) des Herstellers umfasst.

10. Verfahren (600) nach Anspruch 7, wobei ein Versorgen (608) der Vorrichtung (100) mit Einrichtungsinformationen ferner ein sicheres Versorgen der Vorrichtung mit mindestens einem umfasst von: einer Sicherheitsrichtlinie; Vorrichtungseinstellungen; einem Netzwerkberechtigungsnachweis; und/oder einem Lokalnetzwerkzertifikat.

11. Verfahren (600) nach Anspruch 7, das ferner umfasst:

Abrufen eines aktuellen Besitznachweises, der eine kryptografische Signatur einer Kombination aus dem Besitznachweiszertifikat und einem Status des Besitznachweiszertifikats umfasst, auf der Basis eines privaten Schlüssels, der dem gespeicherten öffentlichen Schlüssel (140) entspricht; und

als Reaktion auf eine Authentifizierung des aktuellen Besitznachweises, Bestimmen einer Gültigkeit des Besitznachweiszertifikats (330) auf der Basis des Statuswerts.

12. Verfahren (700) zum Erzeugen eines Besitznachweiszertifikats (300) für eine Vorrichtung (100) nach Anspruch 1, wobei das Verfahren umfasst:

Versorgen (702) der Vorrichtung (100) mit einer Vorrichtungsidentität (130) und einem öffentlichen Schlüssel (140), der dem Hersteller (210) zugeordnet ist;

Erhalten (704) einer Besitzerkennung, die einem Besitzer der Vorrichtung (100) entspricht;

kryptografisches Signieren (706) einer Kombination aus der Vorrichtungskennung (130) und der Besitzerkennung auf der Basis eines privaten Herstellerschlüssels, der dem öffentlichen Schlüssel (140), der dem Hersteller (210) zugeordnet ist, entspricht, mit dem die Vorrichtung (100) versorgt wird, um das Besitznachweiszertifikat (330) zu erzeugen; und

Bereitstellen (708) des Besitznachweiszertifikats (330) an die Vorrichtung (100) und/oder den Besitzer der Vorrichtung.

13. Verfahren (700) nach Anspruch 12, das umfasst:

kryptografisches Signieren einer Kombination aus dem Besitznachweiszertifikat (330) und einem Status des Besitznachweiszertifikats auf der Basis des privaten Herstellerschlüssels, um einen aktuellen Besitznachweis zu erzeugen; und

Bereitstellen des aktuellen Besitznachweises an die Vorrichtung (100) und/oder den Besitzer der Vorrichtung.

14. Verfahren (700) nach Anspruch 13, das ferner umfasst:

Empfangen einer Angabe einer Änderung eines Besitztums der Vorrichtung (100);

kryptografisches Signieren einer Kombination aus dem Besitznachweiszertifikat und einer Angabe eines Widerrufs des Besitznachweiszertifikats auf der Basis des privaten Schlüssels des Herstellers, um einen neuen aktuellen Besitznachweis zu erzeugen; und

Bereitstellen des neuen aktuellen Besitznachweises an die Vorrichtung (100) und/oder den Besitzer der Vorrichtung, der angibt, dass das Besitznachweiszertifikat widerrufen wurde.

15. Verfahren (700) nach Anspruch 12, das ferner ein kryptografisches Signieren einer Kombination aus der Vorrichtungskennung (130) und einer Kennung einer delegierten Organisation umfasst, um ein Delegationszertifikat auf der Basis des privaten Herstellerschlüssels zu erzeugen, um es der Delegationsorganisation zu ermöglichen, gültige Besitznachweiszertifikate (330) zu erzeugen.

**Revendications**

1. Dispositif (100), comprenant :
une mémoire stable (120) comprenant un identifiant de dispositif (130) et une clé publique (140) associée à un fabricant (210) du dispositif ; le dispositif (100) comprenant en outre :

un dispositif de commande (110) configuré pour :

récupérer un certificat de preuve de propriété (330) comprenant une liaison cryptographique entre l'identifiant de dispositif (130) et un identifiant de propriétaire sur la base d'une clé privée correspondant à la clé publique stockée (140) associée au fabricant (210) du dispositif ;

authentifier le certificat de preuve de propriété (330) sur la base de l'identifiant de dispositif stocké (130) et de la clé publique (140) associée au fabricant (210) du dispositif ;

établir un canal de communication authentifié avec un gestionnaire de dispositif (310) associé à l'identifiant de propriétaire sur la base du certificat de preuve de propriété authentifié (330) ; et

recevoir des informations de configuration provenant du gestionnaire de dispositif (310) associé à l'identifiant de propriétaire pour inscrire le dispositif (100) sur un réseau.

2. Dispositif (100) selon la revendication 1, dans lequel la mémoire stable (120) comprend un module de plateforme de confiance.

3. Dispositif (100) selon la revendication 1, dans lequel le dispositif de commande (110) est en outre configuré pour :

récupérer une preuve de propriété actuelle comprenant une signature cryptographique d'une combinaison du certificat de preuve de propriété (330) et d'un état du certificat de preuve de propriété sur la base de la clé privée correspondant à la clé publique stockée (140) ; et

en réponse à l'authentification de la preuve de propriété actuelle, déterminer une validité du certificat de preuve de propriété (330) sur la base de la valeur d'état.

4. Dispositif (100) selon la revendication 1, dans lequel le dispositif (100) comprend une imprimante.

5. Dispositif (100) selon la revendication 1, dans lequel l'identifiant de propriétaire comprend un certificat associé à une organisation qui est propriétaire du dispositif (100) et dans lequel le dispositif de commande (110) est en outre configuré pour authentifier le gestionnaire de dispositif (310) sur la base de l'identifiant de propriétaire du certificat de preuve de propriété authentifié (330).

6. Dispositif (100) selon la revendication 1, dans lequel le dispositif de commande (110) est en outre configuré pour :

authentifier le contenu du certificat de preuve de propriété (330) à l'aide de la clé publique stockée (140) ;

déterminer que l'identifiant de dispositif du certificat de preuve de propriété correspond à l'identifiant de dispositif stocké (130) ; et

déterminer que le gestionnaire de dispositif (310) est associé à un propriétaire légitime du dispositif (100) sur la base de l'identifiant de propriétaire.

7. Procédé (600) d'inscription sécurisée d'un dispositif (100) selon la revendication 1 dans un réseau, le procédé (600) comprenant :

la réception (602), au niveau d'un gestionnaire de dispositif (310), d'une demande d'inscription sur le réseau provenant d'un dispositif (100), la demande comportant un identifiant de dispositif (130) ;

la récupération (606), au niveau du gestionnaire de dispositif (310), d'un certificat de preuve de propriété (330) comprenant une liaison cryptographique entre l'identifiant de dispositif reçu et un identifiant de propriétaire, l'identifiant de propriétaire étant associé au gestionnaire de dispositif (310) ;

l'authentification (606) du certificat de preuve de propriété (330) sur la base d'une clé publique (140) associée à un fabricant (210) du dispositif pour déterminer que le dispositif (100) est associé de manière légitime au gestionnaire de dispositif (310) associé à l'identifiant de propriétaire ; et

la fourniture (608) au dispositif (100) d'informations de configuration.

8. Procédé (600) selon la revendication 7, dans lequel l'authentification du certificat de preuve de propriété (330) comprend en outre :

l'authentification du contenu du certificat de preuve de propriété sur la base de la clé publique du fabricant (140) ;

la détermination que l'identifiant de propriétaire du certificat de preuve de propriété est associé au gestionnaire de dispositif (310) ; et

la détermination que l'identifiant de dispositif du certificat de preuve de propriété (330) correspond à un identifiant de dispositif (130) inclus dans la demande d'inscription provenant du dispositif (100).

9. Procédé (600) selon la revendication 7, comprenant en outre :

l'obtention d'un certificat de délégation de génération de preuve de propriété associé à l'identifiant de dispositif (130) ; et
dans lequel l'authentification de la preuve de propriété comprend en outre l'authentification d'une chaîne de certificat comportant le certificat de délégation de génération de preuve de propriété sur la base de la clé publique du fabricant (140).

10. Procédé (600) selon la revendication 7, dans lequel la fourniture (608) au dispositif (100) d'informations de configuration comprend en outre la fourniture sécurisée au dispositif d'au moins un élément parmi : une politique de sécurité ; des réglages de dispositif ; des justificatifs de réseau ; et/ou un certificat de réseau local.

11. Procédé (600) selon la revendication 7, comprenant en outre :

la récupération d'une preuve de propriété actuelle comprenant une signature cryptographique d'une combinaison du certificat de preuve de propriété et d'un état du certificat de preuve de propriété sur la base d'une clé privée correspondant à la clé publique stockée (140) ; et
en réponse à l'authentification de la preuve de propriété actuelle, déterminer une validité du certificat de preuve de propriété (330) sur la base de la valeur d'état.

12. Procédé (700) de génération d'un certificat de preuve de propriété (300) pour un dispositif (100) selon la revendication 1, le procédé comprenant :

la fourniture (702) au dispositif (100) d'une identité de dispositif (130) et d'une clé publique (140) associée au fabricant (210) ;
l'obtention (704) d'un identifiant de propriétaire correspondant à un propriétaire du dispositif (100) ;
la signature cryptographique (706) d'une combinaison de l'identifiant de dispositif (130) et de l'identifiant de propriétaire sur la base d'une clé privée de fabricant correspondant à la clé publique (140) associée au fabricant (210), fournie au dispositif (100) pour générer le certificat de preuve de propriété (330) ; et
la fourniture (708) du certificat de preuve de propriété (330) au dispositif (100) et/ou au propriétaire du dispositif.

13. Procédé (700) selon la revendication 12, comprenant :

la signature cryptographique d'une combinaison du certificat de preuve de propriété (330) et d'un état du certificat de preuve de propriété sur la base de la clé privée de fabricant pour générer une preuve de propriété actuelle ; et
la fourniture de la preuve de propriété actuelle au dispositif (100) et/ou au propriétaire du dispositif.

14. Procédé (700) selon la revendication 13, comprenant en outre :

la réception d'une indication de changement de propriété du dispositif (100) ;
la signature cryptographique d'une combinaison du certificat de preuve de propriété et d'une indication de révocation du certificat de preuve de propriété sur la base de la clé privée de fabricant pour générer une nouvelle preuve de propriété actuelle ; et
la fourniture de la nouvelle preuve de propriété actuelle au dispositif (100) et/ou au propriétaire du dispositif indiquant que le certificat de preuve de propriété a été révoqué.

15. Procédé (700) selon la revendication 12, comprenant en outre la signature cryptographique d'une combinaison de l'identifiant de dispositif (130) et d'un identifiant d'organisation déléguée pour générer un certificat de délégation sur la base de la clé privée de fabricant pour permettre à l'organisation de délégation de générer des certificats de preuve de propriété valides (330).

100

## Device

110

### Controller

120

#### Secure Storage

130

Device_ID

140

$pk_m$

150

$sk_{dev}$

*Fig. 1*

200

210

### Manufacturer

100

### Device

250

### Ownership Database

220

Provision $sk_{dev}$, Device_ID & $pk_m$

230

Generate Proof-of-Ownership Certificate

Proof-of-Ownership Certificate

240

*Fig. 2*

Fig. 3

Fig. 4

500

502

Retrieve a proof-of-ownership certificate

504

Authenticate proof-of-ownership certificate

506

Establish authenticated communication channel with device manager based on authenticated proof-of-ownership

508

Receive setup information

*Fig. 5*

600

602

Receive request for enrolment of a
device including Device_ID

606

Retrieve proof-of-ownership
certificate for Device_ID

606

Authenticate proof-of-ownership
certificate

608

Provision setup information to device

*Fig. 6*

_700_

**702**

Provision device with $sk_{dev}$, Device_ID and $pk_m$

**704**

Obtain new owner identifier

**706**

Cryptographically generate proof-of-ownership certificate

**708**

Provide proof-of-ownership certificate to device and/or device manager

*Fig. 7*

800

Computer-Readable
Storage Medium

802

Retrieve a proof-of-ownership
certificate

804

Authenticate proof-of-ownership
certificate

806

Establish authenticated
communication channel with device
manager based on authenticated
proof-of-ownership

808

Receive setup information

830

Processor(s)

820

*Fig. 8*

**EP 3 850 510 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10057243 B
- US 2018123804 A
- US 2013290735 A